# EUROPÄISCHE PATENTSCHRIFT

(11) **EP 4 494 530 B1**
(45) Veröffentlichungstag und Bekanntmachung des Hinweises auf die Patenterteilung: **11.03.2026**
(21) Anmeldenummer: 24183942.2
(22) Anmeldetag: 24.06.2024
(51) Int. Cl.: A47J 31/42, A47J 31/60, A47J 42/40

(54) **VERFAHREN ZUR REINIGUNG EINES KAFFEEAUTOMATEN SOWIE KAFFEEAUTOMAT UND COMPUTERPROGRAMMPRODUKT**
METHOD FOR CLEANING A COFFEE MACHINE, COFFEE MACHINE AND COMPUTER PROGRAM PRODUCT
PROCÉDÉ DE NETTOYAGE D'UN AUTOMATE À CAFÉ AINSI QUE AUTOMATE À CAFÉ ET PRODUIT DE PROGRAMME INFORMATIQUE

(30) Priorität: 17.07.2023 DE 102023206774
(43) Veröffentlichungstag der Anmeldung: 22.01.2025
(73) Patentinhaber: BSH Hausgeräte GmbH, 81739 München (DE)
(72) Erfinder: Schuster, Alexander, 83376 Truchtlaching (DE); Höglauer, Michael, 83236 Übersee (DE); Costa, Shanon, 83301 Traunreut (DE)

(56) Entgegenhaltungen:
- EP-B1- 2 781 588
- US-A1- 2015 238 040
- US-B2- 8 382 907
- SEATTLE COFFEE GEAR: "Urnex SuperGrindz Grinder Cleaner | Crew Review", 8 October 2019 (2019-10-08), XP093219238, Retrieved from the Internet <URL:https://www.youtube.com/watch?v=Xpn3E_dQZqI> [retrieved on 20241029]

## Beschreibung

Die vorliegende Erfindung betrifft ein Verfahren zur Reinigung eines Kaffeeautomaten, der ein Mahlwerk, eine Brüheinrichtung und eine Steuereinrichtung umfasst. Die Erfindung betrifft außerdem einen dementsprechend eingerichteten und programmierten Kaffeeautomaten sowie ein entsprechendes Computerprogrammprodukt.

Es ist bekannt, dass sich bei Mahlwerken für Kaffeebohnen auch Bestandteile der Kaffeebohnen, z.B. ölige Bestandteile, an Teilen des Mahlwerks anlagern können. Um einer Verschlechterung einer Qualität von Kaffeepulver, das mit dem Mahlwerk zubereitet wird, entgegenzuwirken, sind Reinigungsmittel für Mahlwerke bekannt. Diese sind z.B. als Mühlenreiniger-Tabletten in Kaffeebohnenform oder als Reinigungsgranulat im Handel erhältlich. Zur Reinigung des Mahlwerks werden die Tabletten anstelle von Kaffeebohnen eingefüllt, gemahlen und danach entsorgt. Dabei wird manuell das Mahlwerk einfach so lange betätigt, bis das Granulat vollständig ausgetragen wurde. Bekannte Verfahren zur Reinigung von Mahlwerken werden beispielsweise in US 8382907 B2, US 2015/238040 A1 und in der Internetveröffentlichung auf youtube.com von Seattle Coffee Gear: "Urnex SuperGrindz Grinder Cleaner | Crew Review" (XP093219238) offenbart.

Jedoch ist dies bei Mahlwerken, die in Kaffeeautomaten verbaut sind, nicht ohne eine unzulässige Manipulation des Gerätes möglich. Bei solchen Kaffeeautomaten wird das Mahlgut üblicher Weise nach dem Austritt aus dem Mahlwerk direkt einer Brüheinrichtung zum Brühen des Kaffeegetränks zugeführt. Daher wird bei einem Einfüllen von Reinigungsgranulat anstelle von Kaffeebohnen ohne die Manipulation des Gerätes das Reinigungsgranulat in die Brüheinrichtung gemahlen und einer Brühung zugeführt. Eine rückstandsfreie Entfernung des Reinigungsgranulats kann daher nicht gewährleistet werden. Dies kann, sofern es nicht sogar gesundheitsschädlich sein kann, mindestens die Qualität von nachfolgend zubereiteten Getränken negativ beeinflussen oder unter Umständen sogar Schäden an der Brüheinrichtung hervorrufen.

Die vorliegende Erfindung beschäftigt sich daher mit der Aufgabe, ein Verfahren zur Reinigung eines Kaffeeautomaten anzugeben, durch welches die Reinigung eines im Kaffeeautomat verbauten Mahlwerks einfach und sicher durchführbar ist.

Diese Aufgabe wird erfindungsgemäß durch den Gegenstand der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einem Kaffeeautomaten, der ein Mahlwerk, eine Brüheinrichtung und eine Steuereinrichtung umfasst, eine spezielle Reinigungsmöglichkeit vorzusehen, die einer Bedienperson eine Reinigung des integrierten Mahlwerks auf einfache und sichere Weise ermöglicht, insbesondere auf besonders nachhaltige Art und Weise.

Erfindungsgemäß wird die Aufgabe durch ein Verfahren zur Reinigung des Kaffeeautomaten gelöst, das folgende Schritte umfasst:
a) auswählen und starten eines Mahlwerksreinigungsprogramms über ein Menü, dass sich die Brüheinrichtung in der Mahlwerksreinigungsposition befindet,
c) leer mahlen eines Kaffeebohnenvorrats, insbesondere bis eine Bohnen-leer-Meldung erfasst wird, oder Erfassen, dass bereits vor oder seit dem Start des Mahlwerksreinigungsprogramms eine Bohnen-leer-Meldung vorliegt oder vorlag,
d) ausgeben eine Aufforderung an eine Bedienperson, dem Mahlwerk ein Reinigungsmittel zuzuführen,
e) aktivieren des Mahlwerks zum Zermahlen des Reinigungsmittels und Reinigen von Mahlwerksbestandteilen,
f) deaktivieren des Mahlwerks nach dem Zermahlen des Reinigungsmittels, insbesondere dann, wenn erneut eine Bohnen-leer-Meldung erfasst wird, wobei "erneut" hier insbesondere als nach der Meldung gemäß Schritt c) und dem Umstand, dass nach dem Start von Schritt e) keine derartige Meldung mehr vorliegt und nun in Schritt f) wieder eine Meldung erfasst wird, verstanden werden soll - ansonsten soll "erneut" hier im Sinn von "der ersten Meldung seit dem Aktivieren des Mahlwerks zum Zermahlen des Reinigungsmittels und Reinigen von Mahlwerksbestandteilen und erneut gegenüber vorhergehenden Meldungen vor dem Aktivieren zum Zermahlen" verstanden werden -
g) ausgeben einer Aufforderung an die Bedienperson, dem Mahlwerk Kaffeebohnen zuzuführen,
h) aktivieren des Mahlwerks zum Zermahlen der zugeführten Kaffeebohnen und zum Austragen von Resten des Reinigungsmittels, insbesondere für eine definierte Zeit oder eine definierte Anzahl von Umdrehungen, bis zu einem deaktivieren des Mahlwerks,
i) ausgeben eine Aufforderung an eine Bedienperson, eine Auffangschale zu leeren,
j) verbringen der Brüheinrichtung in eine Ausgangsposition und/oder erfassen, dass sich die Brüheinrichtung in der Ausgangsposition befindet,
k) beenden des Mahlwerksreinigungsprogramms.

Mit dem erfindungsgemäßen Verfahren können nunmehr auch solche Mahlwerke einfach mit Reinigungsmittel gereinigt werden, die in Kaffeeautomaten verbaut sind, ohne dass dies eine Manipulation des Kaffeeautomaten erfordert oder nachteilige Rückstände des Reinigungsmittels in Komponenten des Kaffeeautomaten zu befürchten sind. Dabei ist die Bedienperson nicht auf Detailkenntnisse verschiedener Funktionsabläufe in Kaffeeautomaten angewiesen, um die genannte Manipulation überhaupt durchführen zu können. Dadurch ist die Reinigung eines im Kaffeeautomat verbauten Mahlwerks für jede Bedienperson nicht nur einfach, sondern auch sicher durchführbar.

Zwischen Schritt b) und Schritt c) kann in einem Zwischenschritt b-x) eine Aufforderung an eine Bedienperson erfolgen, alle manuell aus einem Bohnenbehälter des Kaffeeautomaten entfernbaren Kaffeebohnen manuell zu entfernen, oder weitgehend zu entfernen. Dadurch kann nicht nur ein Bohnenausschuss während des Verfahrens verringert werden, sondern auch eine Dauer des Verfahrens vorteilhaft deutlich verkürzt werden.

Eine Erfassung der Bohnen-leer-Meldung kann bekanntermaßen insbesondere aus einem vergleichsweise schnellen Absinken des Mahlwerksstroms abgeleitet werden, was eine besonders kostengünstige, aber auch besonders präzise und schnelle Erfassung ermöglicht. Unter einer Bohnen-leer-Meldung soll hier einerseits ein Signal verstanden werden, das die Information liefert, dass ein Bohnenvorrat aufgebracht ist und/oder dass Bohnen nachzufüllen sind und andererseits auch eine entsprechende Meldung an eine Bedienperson.

Eine Mahlwerksreinigungsposition der Brüheinrichtung kann, je nach Ausführung der Brüheinrichtung, eine spezifische nur für die Mahlwerksreinigung anzufahrende Position sein, oder eine Spülposition, eine Brühposition, oder eine Beladeposition. Im Fall einer spezifischen Position, einer Spülposition oder einer Brühposition, abhängig von der Ausführung der Brüheinrichtung, kann vorteilhaft auf einfache Weise sichergestellt sein, dass kein Reinigungsmittel in eine Brühkammer der Brüheinrichtung gelangen kann. Dafür kann ggf. im Nachgang eine äußerliche Reinigung der Brüheinrichtung nötig sein. Im Fall einer Beladeposition kann das Reinigungsmittel mit denselben Mitteln ausgetragen werden, wie sonst auch ausgelaugtes Kaffeepulver. Dafür kann ggf. ein Schritt zum Spülen der Brüheinrichtung nötig sein.

Bei einer vorteilhaften Weiterbildung des erfindungsgemäßen Verfahrens kann das Mahlwerksreinigungsprogramm in Schritt a) entweder separat ausgewählt und gestartet werden oder als Kombiprogramm mit anderen Reinigungsprogrammen zusammen ausgewählt und gestartet. Insbesondere kann bei einem Kombiprogramm der Schritt a) als Auswahl und Start des Kombiprogramms angesehen werden und/oder der Schritt k) als Ende des Kombiprogramms erfolgen. Das bedeutet insbesondere, dass zwischen den Schritten des erfindungsgemäßen Programms auch Schritte der anderen Reinigungsprogramme erfolgen können. Diese Weiterbildung kann besonders Vorteilhaft die Bedürfnisse verschiedener Bedienpersonen zufriedenstellen, von denen Einige die verringerte Häufigkeit nötiger Reinigungsvorgänge durch die Kombination der einzelnen Vorgänge zu einem Kombiprogramm bevorzugen, und Einige andere wiederum den optimierten Ressourceneinsatz bei einer Reinigung jeder Komponente erst genau dann, wenn deren Reinigung explizit angezeigt ist.

Bei einer weiteren vorteilhaften Weiterbildung des erfindungsgemäßen Verfahrens erfolgen, bei einer Auswahl als Kombiprogramm mit anderen Reinigungsprogrammen zusammen, zwischen den Schritten h) und i), und/oder i) und j) und/oder j) und k) Schritte eines Brüheinrichtungs-Reinigungsprogramms, insbesondere eines Brükammer-Innen-Reinigungsprogramms zum Reinigen des Inneren der Brühkammer und ggf. von Leitungswegen in und/oder stromab der Brühkammer. Dadurch fügen sich die Schritte des Brüheinrichtungs-Reinigungsprogramms nicht nur an einer besonders intuitiven Stelle im Ablauf des Kombiprogramms ein. Vielmehr können durch die Schritte des Brüheinrichtungs-Reinigungsprogramms nach dem Enden von Schritt h) auch noch zuverlässiger alle erdenklichen Rückstände des Reinigungsmittels für das Mahlwerk ausgetragen werden.

Bei einer weiteren vorteilhaften Weiterbildung des erfindungsgemäßen Verfahrens wird vor Schritt a) in einem Normalbetrieb des Kaffeeautomaten beim Erfassen der Bohnen-leer-Meldung neben der Ausgabe der Bohnen-leer-Meldung eine Auswahl des Menüs zum Auswählen und Starten des Mahlwerksreinigungsprogramms angeboten. Dadurch kann ein ansonsten möglicherweise aufwändiges Entfernen von in einen Kaffeebohnenbehälter eingefüllten Kaffeebohnen vermieden werden und auch ein Zeitaufwand für die Durchführung des Mahlwerksreinigungsprogramms verkürzt und ein Ressourcenverbrauch minimiert werden.

Bei einer weiteren vorteilhaften Weiterbildung des erfindungsgemäßen Verfahrens erfolgt zwischen Schritt b) und Schritt c) in einem Schritt b-i) eine Aufforderung eine Auffangschale zu leeren. Dadurch kann zusätzlich Platz für das in Schritt c) zu erwartende Kaffeepulver geschaffen werden. So kann auch vermieden werden, dass während dem leer mahlen in Schritt c) warme Luft oder Kondenswasser aus dem Restwasser oder den Kaffeetrestern in der Auffangschale aufsteigt und ein Anhaften von trockenem Kaffeepulver beim leer mahlen an Teilen des Kaffeeautomaten begünstigt.

Bei einer weiteren vorteilhaften Weiterbildung des erfindungsgemäßen Verfahrens erfolgt zwischen Schritt d) und Schritt e) in einem Schritt d-i) eine Anpassung einer Mahlgradeinstellung auf eine vorbestimmte Reinigungseinstellung. Dies kann in einer vorteilhaften Ausführung automatisch erfolgen, oder in einer kostengünstigen Variante auf eine Aufforderung hin manuell erfolgen. Dadurch kann ein für die Reinigung besonders vorteilhafter Mahlscheibenabstand erreicht werden und die Reinigung so noch gründlicher und gleichzeitig effektiver erfolgen.

Bei einer weiteren vorteilhaften Weiterbildung des erfindungsgemäßen Verfahrens erfolgt zwischen Schritt f) und Schritt g) in einem Schritt f-i) eine Aufforderung eine/die Auffangschale zu leeren. Dadurch können Rückstände des Reinigungsmittels und/oder das durchgemahlene Reinigungsmittel entfernt werden, ohne dass sie bzw. es sich erneut mit Kaffeepulver vermischt.

Bei einer weiteren vorteilhaften Weiterbildung des erfindungsgemäßen Verfahrens erfolgt zwischen Schritt j) und Schritt k) in einem Schritt j-i) eine Aufforderung die Brüheinrichtung zu entnehmen und zu reinigen. Dadurch können eventuell hartnäckig anhaftende Rückstände des Reinigungsmittels besonders effektiv und sicher ausgetragen werden.

Die eingangs genannte Aufgabe wird auch durch einen Kaffeeautomaten gelöst, der ein Mahlwerk, eine Brüheinrichtung und eine Steuereinrichtung aufweist und der zur Durchführung des vorhergehend beschriebenen Verfahrens eingerichtet und programmiert ist. Die vorgenannten Vorteile können somit schon dadurch erreicht werden, dass die Auswerte-/Steuereinrichtung eines ansonsten üblichen Kaffeeautomaten ohne weiteren Zusatzaufwand entsprechend eingerichtet und programmiert wird. Daher können die vorgenannten Vorteile erreicht werden, ohne dass hierfür weitere Mittel oder Einrichtungen hergestellt und verwendet werden müssen, was sich ebenfalls besonders Vorteilhaft auf die Nachhaltig auswirkt. Der Kaffeeautomat kann insbesondere als Siebträger-Kaffeeautomat oder als Kaffeevollautomat ausgebildet sein, da es auch Kaffeeautomaten gibt, die keine Kaffeevollautomaten sind, es jedoch keine Kaffeevollautomaten ohne Mahlwerk gibt. Da bei Kaffeevollautomaten die Mahlwerke üblicherweise unzugänglich verbaut sind, und insbesondere bereits verschiedene Reinigungsprogramme etabliert sind, ist die erfindungsgemäße Lösung hier besonders Vorteilhaft.

Des Weiteren wird die eingangs genannte Aufgabe auch durch ein Computerprogrammprodukt gelöst, das Befehle umfasst, die bei der Ausführung des Programms durch eine Steuereinrichtung eines Kaffeeautomaten, insbesondere des vorhergehend beschriebenen Kaffeeautomaten, besonders bevorzugt des Kaffeevollautomaten, die Steuereinrichtung veranlassen, das vorhergehend beschriebene Verfahren auszuführen. Dadurch kann auch ein geeigneter herkömmlicher Kaffeeautomat, insbesondere Kaffeevollautomat, mittels des erfindungsgemäßen Computerprogrammprodukts, z.B. durch herunterladen einer entsprechenden App über das Internet, in die Lage versetzt werden, von den vorgenannten Vorteilen zu profitieren. Hierfür muss an Sich nicht einmal ein neuer Kaffeeautomat hergestellt werden, was eine besonders nachhaltige Lösung der eingangs genannten Aufgabe ermöglicht.

Weitere wichtige Merkmale und Vorteile der Erfindung ergeben sich aus den Unteransprüchen, aus der Zeichnung und aus der zugehörigen Figurenbeschreibung anhand der Zeichnung.

Ein bevorzugtes Ausführungsbeispiel der Erfindung ist in der Zeichnung dargestellt und wird in der nachfolgenden Beschreibung näher erläutert.

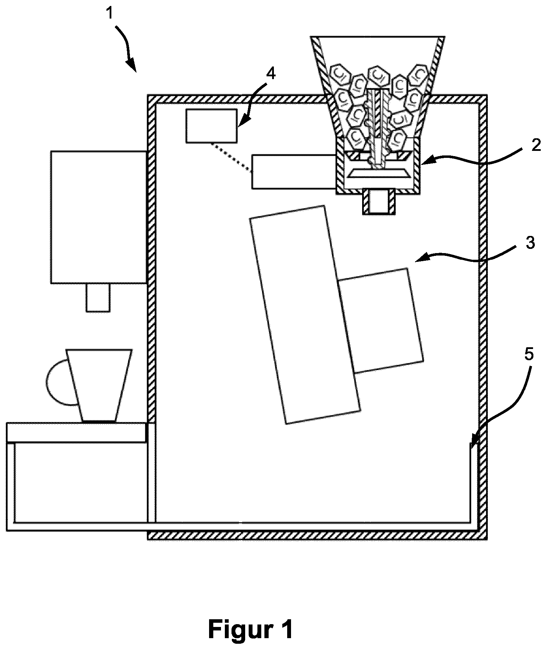

Die einzige Figur 1 zeigt einen erfindungsgemäßen Kaffeeautomaten bei der Durchführung eines erfindungsgemäßen Verfahrens zur Reinigung, stilisiert im Teilschnitt.

Die Figur 1 zeigt dabei einen erfindungsgemäßen Kaffeeautomaten 1 mit einem Mahlwerk 2, einer Brüheinrichtung 3 und einer Steuereinrichtung 4 bei der Durchführung eines erfindungsgemäßen Verfahrens zur Reinigung des Kaffeeautomaten 1. Durch das erfindungsgemäße Computerprogrammprodukt, wird der Kaffeeautomat 1 in die Lage versetzt, dieses Verfahren durchzuführen. Denn das Computerprogrammprodukt umfasst Befehle, die bei der Ausführung des Programms durch die Steuereinrichtung 4 des Kaffeeautomaten 1 die Steuereinrichtung 4 veranlassen, das folgend erläuterte Verfahren auszuführen.

Bei dem Verfahren zur Reinigung des Kaffeeautomaten 1 wird zunächst das Mahlwerksreinigungsprogramms über ein Menü ausgewählt und gestartet, im vorliegenden Beispiel durch eine Bedienperson. Anschließend wird durch Befehle der Steuerung 4 die Brüheinrichtung 3 in eine Mahlwerksreinigungsposition verbracht, bis über eine nicht dargestellte Stromüberwachung erfasst wird, dass sich die Brüheinrichtung 3 in der Mahlwerksreinigungsposition befindet. Dann erfolgt hier in einem Zwischenschritt eine Aufforderung an die Bedienperson, alle manuell aus einem Bohnenbehälter des Kaffeeautomaten 1 entfernbaren Kaffeebohnen manuell soweit möglich zu entfernen. Bei einem Abnehmbaren Bohnenbehälter kann auch die Aufforderung erfolgen, den Bohnenbehälter abzunehmen, zu entleeren und wieder einzusetzen. Anschließend erfolgt ein leer mahlen eines Kaffeebohnenvorrats, ggf. des Vorrats unterhalb des abnehmbaren Bohnenbehälters, bei dem das Mahlwerk 2 so lange betrieben wird, bis eine Bohnen-leer-Meldung erfasst wird. Dann wird eine Aufforderung an die Bedienperson ausgegeben, dem Mahlwerk 2 ein Reinigungsmittel, hier dargestellt als annähernd bohnenförmige Reinigungstabletten C, zuzuführen. Figur 1 zeigt den Kaffeeautomaten 1 mit bereits zugeführten Reinigungstabletten C, die anstelle von Kaffeebohnen in den Kaffeebohnenvorrat, hier einem Bohnenbehälter, eingefüllt wurden. Anschließend wird das Mahlwerk 2 aktiviert, um das Reinigungsmittel, hier die Reinigungstabletten C, zu zermahlen und dabei Mahlwerksbestandteilen zu reinigen. Nach dem Zermahlen des Reinigungsmittels, hier der Reinigungstabletten C, wird erneut eine Bohnen-leer-Meldung erfasst und daraufhin das Mahlwerk 2 deaktiviert.

Anschließend wird eine Aufforderung an die Bedienperson ausgegeben, dem Mahlwerk 2 Kaffeebohnen zuzuführen. Dann wird das Mahlwerk 2 erneut aktiviert, um die zugeführten Kaffeebohnen zu zermahlen und dabei Reste des Reinigungsmittels auszutragen. Dies geschieht hier für eine definierte und in einem Speicher der Steuereinrichtung 4 hinterlegte Zeit bis zum deaktivieren des Mahlwerks 2, im vorliegenden Beispiel 10 Sekunden. Anschließend wird eine Aufforderung an die Bedienperson ausgegeben, eine Auffangschale 5 zu leeren. Danach wird die Brüheinrichtung 3 in eine Ausgangsposition verbracht, bis erfasst wird, dass sich die Brüheinrichtung 2 in der Ausgangsposition befindet. Daraufhin wird das Mahlwerksreinigungsprogramm beendet.

Mit dem Verfahren kann nun auch das Mahlwerk 2 einfach mit Reinigungsmittel gereinigt werden, obwohl es im Kaffeeautomaten 1 verbaut ist, ohne dass dies eine Manipulation des Kaffeeautomaten 1 erfordert, oder, dass nachteilige Rückstände des Reinigungsmittels in Komponenten des Kaffeeautomaten 1 zu befürchten sind. Dabei ist die Bedienperson, die im vorliegenden Beispiel keine Detailkenntnisse zu verschiedenen Funktionsabläufen des Kaffeeautomaten 1 hat, ohne Weiteres in der Lage, die Reinigung des im Kaffeeautomat 1 verbauten Mahlwerks 2 nicht nur einfach, sondern auch sicher durchzuführen.

Im vorhergehend beschriebenen Beispiel wurde das Mahlwerksreinigungsprogramm separat ausgewählt und gestartet. Es kann jedoch auch als Kombiprogramm mit anderen Reinigungsprogrammen zusammen ausgewählt und gestartet werden. Dadurch können alle am Kaffeeautomaten 1 nötigen Reinigungsprogramme in einem Aufwasch erledigt werden.

### Bezugszeichen

- 1: Kaffeeautomat
- 2: Mahlwerk
- 3: Brüheinrichtung
- 4: Steuereinrichtung
- 5: Auffangschale

## Patentansprüche

1. Verfahren zur Reinigung eines Kaffeeautomaten (1), der ein Mahlwerk (2), eine Brüheinrichtung (3) und eine Steuereinrichtung (4) umfasst, **gekennzeichnet durch** die Schritte;
a) auswählen und starten eines Mahlwerksreinigungsprogramms über ein Menü,
b) verbringen der Brüheinrichtung in eine Mahlwerksreinigungsposition und/oder erfassen, dass sich die Brüheinrichtung in der Mahlwerksreinigungsposition befindet,
c) leer mahlen eines Kaffeebohnenvorrats, insbesondere bis eine Bohnen-leer-Meldung erfasst wird, oder Erfassen, dass bereits vor oder seit dem Start des Mahlwerksreinigungsprogramms eine Bohnen-leer-Meldung vorlag oder vorliegt,
d) ausgeben einer Aufforderung an eine Bedienperson, dem Mahlwerk ein Reinigungsmittel zuzuführen,
e) aktivieren des Mahlwerks zum Zermahlen des Reinigungsmittels und Reinigen von Mahlwerksbestandteilen,
f) deaktivieren des Mahlwerks nach dem Zermahlen des Reinigungsmittels, insbesondere dann, wenn erneut eine Bohnen-leer-Meldung erfasst wird,
g) ausgeben einer Aufforderung an die Bedienperson, dem Mahlwerk Kaffeebohnen zuzuführen,
h) aktivieren des Mahlwerks zum Zermahlen der zugeführten Kaffeebohnen und zum Austragen von Resten des Reinigungsmittels, insbesondere für eine definierte Zeit oder eine definierte Anzahl von Umdrehungen, bis zu einem deaktivieren des Mahlwerks,
i) ausgeben einer Aufforderung an eine/die Bedienperson, eine Auffangschale (5) zu leeren,
j) verbringen der Brüheinrichtung in eine Ausgangsposition und/oder erfassen, dass sich die Brüheinrichtung in der Ausgangsposition befindet,
k) beenden des Mahlwerksreinigungsprogramms.

2. Verfahren nach Anspruch 1, **dadurch gekennzeichnet, dass** das Mahlwerksreinigungsprogramm in Schritt a) entweder separat ausgewählt und gestartet werden kann, oder als Kombiprogramm mit anderen Reinigungsprogrammen zusammen ausgewählt und gestartet werden kann.

3. Verfahren nach Anspruch 2, **dadurch gekennzeichnet, dass** bei einer Auswahl als Kombiprogramm mit anderen Reinigungsprogrammen zusammen, zwischen den Schritten h) und i), und/oder i) und j) und/oder j) und k) mindestens ein Schritt eines Brüheinrichtungs-Reinigungsprogramms erfolgen.

4. Verfahren nach einem der Ansprüche 1 bis 3, **dadurch gekennzeichnet, dass** vor Schritt a), in einem Normalbetrieb des Kaffeeautomaten, beim Erfassen der Bohnen-leer-Meldung in einem Schritt 0-a) neben der Ausgabe der Bohnen-leer-Meldung eine Auswahl des Menüs zum Auswählen und Starten des Mahlwerksreinigungsprogramms angeboten wird.

5. Verfahren nach einem der Ansprüche 1 bis 4, **dadurch gekennzeichnet, dass** zwischen Schritt b) und Schritt c) in einem Schritt b-i) eine Aufforderung erfolgt, die Auffangschale (5) zu leeren.

6. Verfahren nach einem der Ansprüche 1 bis 5, **dadurch gekennzeichnet, dass** zwischen Schritt d) und Schritt e) in einem Schritt d-i) eine Anpassung einer Mahlgradeinstellung auf eine vorbestimmte Reinigungseinstellung, insbesondere automatisch oder auf eine ausgegebene Aufforderung hin manuell, erfolgt.

7. Verfahren nach einem der vorhergehenden Ansprüche, **dadurch gekennzeichnet, dass** zwischen Schritt f) und Schritt g) in einem Schritt f-i) eine Aufforderung erfolgt, die Auffangschale (5) zu leeren.

8. Verfahren nach einem der vorhergehenden Ansprüche, **dadurch gekennzeichnet, dass** zwischen Schritt j) und Schritt k) in einem Schritt j-i) eine Aufforderung erfolgt, die Brüheinrichtung (3) zu entnehmen und zu reinigen.

9. Kaffeeautomat (1), mit einem Mahlwerk (2), einer Brüheinrichtung (3) und einer Steuereinrichtung (4), **dadurch gekennzeichnet, dass** die Steuereinrichtung (4) zur Durchführung des Verfahren nach einem der vorhergehenden Ansprüche eingerichtet und programmiert ist.

10. Computerprogrammprodukt, umfassend Befehle, die bei der Ausführung des Programms durch eine Steuereinrichtung (4) eines Kaffeeautomaten (1) nach Anspruch 9, die Steuereinrichtung (4) veranlassen, das Verfahren nach einem der Ansprüche 1 bis 8 durchzuführen.

## Claims

1. Method for cleaning an automatic coffee machine (1), which comprises a grinder (2), a brewing facility (3) and a control facility (4), **characterised by** the steps;
a) selecting and starting a grinder cleaning program via a menu,
b) bringing the brewing facility into a grinder cleaning position and/or detecting that the brewing facility is located in the grinder cleaning position,
c) grinding a coffee bean supply to empty, in particular until a bean-empty message is detected, or detecting that a bean-empty message already was or is present before or since the start of the grinder cleaning program,
d) outputting a request to an operator, to supply cleaning agent to the grinder,
e) activating the grinder to grind the cleaning agent and clean grinder components,
f) deactivating the grinder after the grinding of the cleaning agent, in particular when a new bean-empty message is detected,
g) outputting a request to the operator to supply coffee means to the grinder,
h) activating the grinder to grind the supplied coffee beans and to deliver residues of the cleaning agent, in particular for a defined time or a defined number of cycles, until a deactivation of the grinder,
i) outputting a request to a/the operator, to empty a collection tray (5),
j) bringing the brewing facility into a starting position and/or detecting that the brewing facility is located in the starting position,
k) ending the grinder cleaning program.

2. Method according to claim 1, **characterised in that** in step a) the grinder cleaning program can either be selected and started separately, or can be selected and started as a combined program together with other cleaning programs.

3. Method according to claim 2, **characterised in that** when selected as a combined program together with other cleaning programs, at least one step of a brewing facility cleaning program takes place between steps h) and i), and/or i) and j) and/or j) and k).

4. Method according to one of claims 1 to 3, **characterised in that** before step a), in normal operation of the automatic coffee machine, when the bean-empty message is detected in a step 0-a) in addition to the output of the bean-empty message, a selection of the menu is offered for selecting and starting the grinder cleaning program.

5. Method according to one of claims 1 to 4, **characterised in that** a request to empty the collection tray (5) takes place between step b) and c) in a step b-i).

6. Method according to one of claims 1 to 5, **characterised in that** an adjustment of a degree of grinding setting to a predetermined cleaning setting takes place between step d) and step e) in a step d-i), in particular automatically or manually in response to an output request.

7. Method according to one of the preceding claims, **characterised in that** a request to empty the collection tray (5) takes place between step f) and step g) in a step f-i).

8. Method according to one of the preceding claims, **characterised in that** a request to remove and clean the brewing facility (3) takes place between step j) and step k) in a step j-i).

9. Automatic coffee machine (1), with a grinder (2), a brewing facility (3) and a control facility (4), **characterised in that** the control facility (4) is configured and programmed to perform the method according to one of the preceding claims.

10. Computer program product, comprising commands which, when the program is executed by a control facility (4) of an automatic coffee machine (1) according to claim (9), prompt the control facility (4) to perform the method according to one of claims 1 to 8.

## Revendications

1. Procédé destiné au nettoyage d'une machine à café (1) qui comprend un broyeur (2), un dispositif d'infusion (3) et un dispositif de commande (4), **caractérisé par** les étapes consistant à :
a) sélectionner et démarrer un programme de nettoyage de broyeur par l'intermédiaire d'un menu,
b) faire passer le dispositif d'infusion dans une position de nettoyage de brûleur et/ou détecter que le dispositif d'infusion se trouve dans la position de nettoyage de broyeur,
c) broyer à vide une réserve de grains de café, en particulier jusqu'à ce qu'une notification d'absence de grains soit détectée, ou détecter qu'avant ou depuis le démarrage du programme de nettoyage de broyeur une notification d'absence de grains était présente ou est présente,
d) émettre une demande à un serveur d'amener un moyen de nettoyage au broyeur,
e) activer le broyeur pour broyer l'agent de nettoyage et nettoyer des composants de broyeur,
f) désactiver le broyeur après le broyage de l'agent de nettoyage, en particulier si une notification d'absence de grains est de nouveau détectée,
g) émettre une demande au serveur d'amener des fèves de café au broyeur,
h) activer le broyeur pour broyer les fèves de café amenées et pour éliminer des restes de l'agent de nettoyage, en particulier pour un temps défini ou un nombre défini de rotations jusqu'à une désactivation du broyeur,
i) émettre une demande à un/au serveur de vider un bac de récupération (5),
j) faire passer le dispositif d'infusion dans une position de départ et/ou détecter que le dispositif d'infusion se trouve dans la position de départ,
k) mettre fin au programme de nettoyage de broyeur.

2. Procédé selon la revendication 1, **caractérisé en ce que** le programme de nettoyage de broyeur à l'étape a) soit peut être sélectionné et démarré séparément soit peut être sélectionné et démarré conjointement avec d'autres programmes de nettoyage en tant que programme combiné.

3. Procédé selon la revendication 2, **caractérisé en ce que** lors d'une sélection en tant que programme combiné avec d'autres programmes de nettoyage conjointement, au moins une étape d'un programme de nettoyage de dispositif d'infusion est faite entre les étapes h) et i) et/ou i) et j) et/ou j) et k).

4. Procédé selon l'une quelconque des revendications 1 à 3, **caractérisé en ce que**, avant l'étape a), dans un fonctionnement normal de la machine à café, lors de la détection de la notification d'absence de grains lors d'une étape 0-a) en plus de l'émission de la notification d'absence de grains une sélection du menu pour la sélection et le démarrage du programme de nettoyage de broyeur est proposée.

5. Procédé selon l'une quelconque des revendications 1 à 4, **caractérisé en ce que**, entre l'étape b) et l'étape c) lors d'une étape b-i) une demande est faite afin de vider le bac de récupération (5).

6. Procédé selon l'une quelconque des revendications 1 à 5, **caractérisé en ce que**, entre l'étape d) et l'étape e) lors d'une étape d-i) une adaptation d'un réglage de finesse de mouture sur un réglage de nettoyage prédéterminé, en particulier de manière automatique ou manuelle sur une demande émise, est faite.

7. Procédé selon l'une quelconque des revendications précédentes, **caractérisé en ce que**, entre l'étape f) et l'étape g) lors d'une étape f-i), une demande est faite afin de vider le bac de récupération (5).

8. Procédé selon l'une quelconque des revendications précédentes, **caractérisé en ce que**, entre l'étape j) et l'étape k) lors d'une étape j-i) une demande est faite afin de retirer et de nettoyer le dispositif d'infusion (3).

9. Machine à café (1), avec un broyeur (2), un dispositif d'infusion (3) et un dispositif de commande (4), **caractérisée en ce que** le dispositif de commande (4) est conçu et programmé pour la mise en œuvre du procédé selon l'une quelconque des revendications précédentes.

10. Produit de programme informatique, comprenant des instructions qui amènent, lors de la réalisation du programme par le biais d'un dispositif de commande (4) d'une machine à café (1) selon la revendication 9, le dispositif de commande (4) à mettre en œuvre le procédé selon l'une quelconque des revendications 1 à 8.
